Europäisches Patentamt

European Patent Office

Office européen des brevets

(11) Publication number: **0 040 370**

**A2**

(12) **EUROPEAN PATENT APPLICATION**

(21) Application number: **81103492.5**

(22) Date of filing: **07.05.81**

(51) Int. Cl.³: **B 01 F 3/12**
**A 23 C 9/15, B 01 F 1/00**

(30) Priority: **19.05.80 IT 2216480**

(43) Date of publication of application:
**25.11.81 Bulletin 81/47**

(84) Designated Contracting States:
**DE FR GB NL**

(71) Applicant: **Officina Meccanica di Evelino Cesana O.M.E.C.**
**24, via Giotto**
**I-20048 Carate Brianza (Milan)(IT)**

(72) Inventor: **Cesana, Evelino**
**24, via Giotto**
**I-20048 Carate Brianza (Milan)(IT)**

(74) Representative: **Marietti, Giuseppe**
**CENTRO DI CONSULENZA IN PROPRIETA'**
**INDUSTRIALE viale Caldara, 43**
**I-20122 Milano(IT)**

(54) Proportional mixer, especially for milk powder and water.

(57) This invention concerns a mixing-proportioning equipment of powdered milk flours specially for feeding machines used in animal breeding, said mixing-proportioning equipment comprising a hopper to receive the powdered milk, a device for distributing and proportioning the powder and a container for artificial milk mixing and preparation wich receives the flour and a corresponding amount of water. In order to obtain a perfect control of the quantity of powdered milk sent to the mixing container, the powder distributing and proportioning device is formed by a scroll which is rotated at adjustable speed inside a duct housing same, said scroll receiving the milk powder from the bottom of the hopper and sending it to the mixing container.

Fig. 1

This invention concerns a device for mixing and proportioning specially powdered milk flours to be used in
feeding machines designed for breeding animals, in particular calves and lambs, said device comprising, in a way
known in itself, a hopper to receive the milk flour in
powder, a device to distribute and proportion the flour,
as well as a container for mixing and preparing the artifi
cial milk, said container receiving the flour and a corresponding amount of water.

Mixing-proportioning equipments for powdered milks
of the above mentioned type are already known and used.
For instance, Italian patent N. 796387 concerns a mixing-
proportioning equipment of said type having a hopper which
houses a stirrer for the milk flour, as well as a device
to distribute and proportion the flour essentially constituted by a coupee of impellers with blades positioned side
by side, the first one of which impellers is placed below
the hopper. The passage between said two impellers is controlled by a mobile element which opens or closes said pas
sage so as to determine the amount of flour sent to the
second impeller, which then conveys the flour directly into
the container where the artificial milk is mixed and prepared.

This known mixing-proportioning equipment, like others
having similar configurations, has the drawback that the
amount, or better the quantity in weight of powdered milk sent
to the mixing container is not exactly controllable and in
particular does not show a constant value as given by a certain
setting of the mixing-proportioning equipment controls, in that    said quantity in weight tends to considerably vary
for a series of external factors not dependent from the ma
chine, such as in particular the atmospheric conditions,
the physico-chemical properties of the used flour, which
may vary from type to type and from batch to batch, and
other factors out of any actual control possibility. For
example, when the atmospheric humidity changes, the behaviour of the powdered substance considerably varies and
passes from a satisfactorily complete and fluid flowing
to the formation of bridges, blockings or points of stanching , which consequently reduces the amount fed. On the
contrary, the quantity must always be exactly checked and
maintained strictly constant for a determined adjustment
of the machine, in order to obtain a solution, with the
water sent to the mixing contained, having a predetermined
concentration.

The attempts done to solve this problem have not resulted up to now in satisfactory solutions, so that a
serious drawback hampering a wider diffusion of machines
and equipments for the artificial breeding of animals real
ly consists in the actual impossibility  of obtaining in
an automatic way a solution in water of the powdered milk,
constantly showing desidered proportions.

This intention allows to completely solve this problem
by    providing a mixing-proportioning equipment of powdered
substances, in particular of powdered milk flours, allowing
to always keep at a set value the quantity in weight of the
flour sent to the mixing container, independently from any
external factor tending to modify the pysico-chemical condi tions of the flour and its degree of fluency inside the equipment.

Essentially, according to the invention, what above said is obtained, in a mixing-proportioning equipment of the type above defined, in that the device to feed and proportion the flour is constituted by a scroll which is rotated at a controllable speed inside a duct housing same, said scroll receiving the flour from the bottom of the hopper and sending it to the mixing container. Advantageosly, said scroll is of the type without mobile care /and has an external diameter substantially equal to the internal diameter of the housing duct, being formed by helix-wound wire or rod, inside which a knife blade is preferably assembled in fixed position acting as holding-up element to the rotations of the flour or in any case of the powdered substance inside the scroll.

The invention will be better described with reference to a preferred embodiment thereof, exemplifyingly shown in the attached drawing, where in:

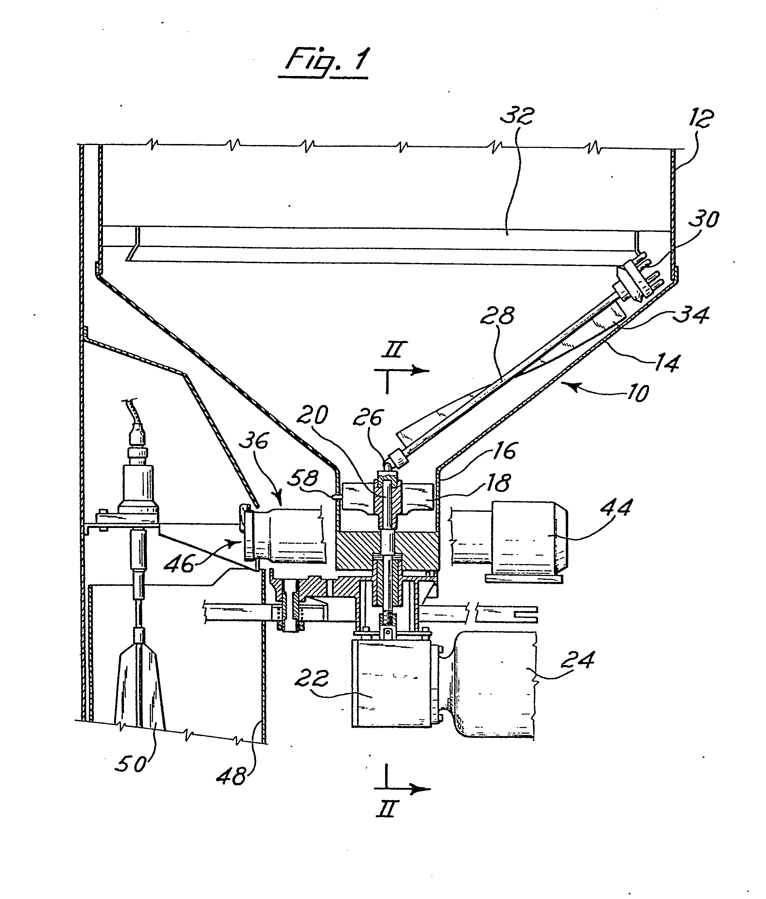

Figure 1 is a cross sectional view of mixing-proportioning equipment according /to this invention, along a vertical plane and with pieces at sight.

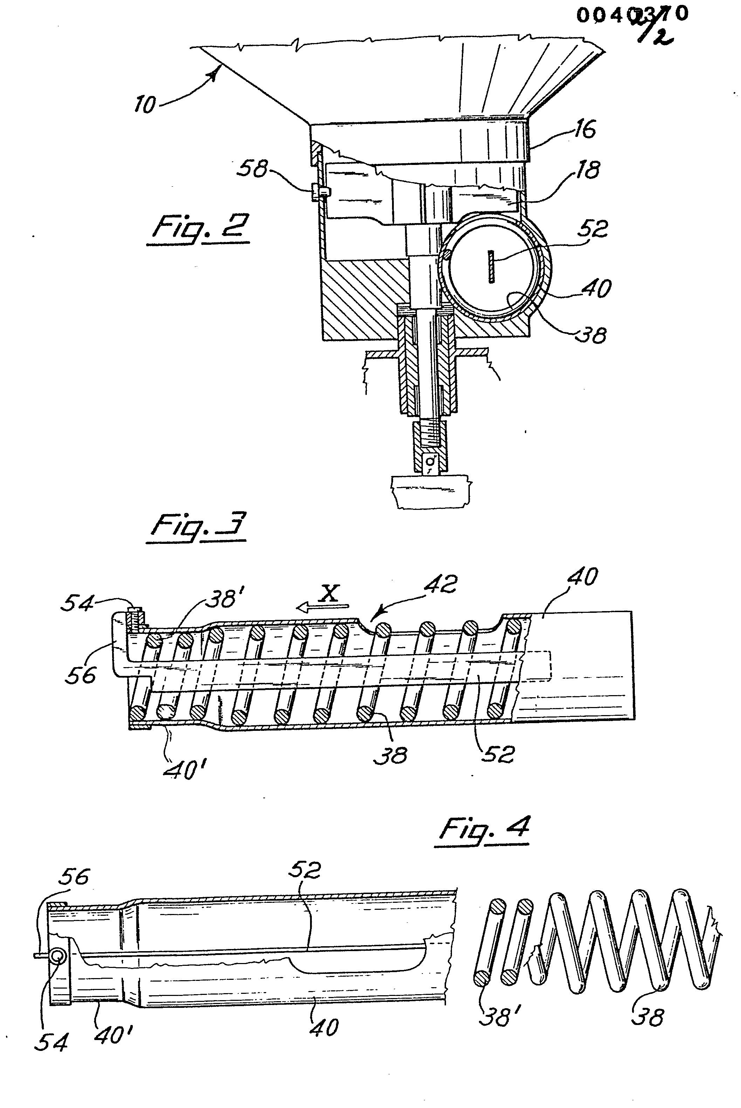

Figure 2 is a cross sectional view along the line II-II of figure 1;

Figure 3 is an axial sectional view of the feeding scroll for the flour.

Figure 4 illustrates in a detached position, partly at sight and partly in section, the components of the feeding and proportioning scroll.

With reference to the drawing, the shown mixing-propor
tioning equipment comprises a hopper 10 having an upper cylindrical zone 12 and a lower truncated cone-shaped zone 14
ending in its lower part with a cylindrical section 16, of
reduced diameter, in which rotates a blade stirrer 18 of a
type substantially known in itself, said stirrer 18 being
supported by an axial shaft 20, actuated by a motor 24
through a reduction gear 22. A shaft 28 is connected in a
way known in itself, by means of a joint 26, to the shaft
20, said shaft 28 being positioned parallely to the slanting
wall 14 of the hopper and being equipped at its upper outer
end with a gear-shaped toothed element 30, which meshes
with a rack 32 provided in correspondence of the lower internal end of the upper cylindrical zone 12 of hopper 10.
The shaft 28 is equipped with blades, in particular at
least one helicoidally placed blade 34 to perform a stirring and mixing operation on the flour in the hopper 10.

Downstream the stirrer 18 a device to feed and proportion the flour is placed, said device according to
the invention, being essentially constituted by a horizontal scroll 36, formed by an helicoidal element 38 and
by a tubular duct 40 housing said helicoidal element, the
flour being sent to the scroll through an opening 42
of the duct 40 by fall below the blades of stirrer 18.
The mobile helicoidal element 38 of scroll 36 is actuated
by a motor 44, independent from the previously seen motor
24 and capable of varying its speed in an adjustable and
controllable way.

The horizontal scroll 36 has an outlet leading to
a container 48 which receives, in a not particularly illustrated way, an amount of water and where mixing of the powdered flour with water is carried out by means of a stirrer 50 of a type known in itself. The milk obtained in the container 48 is then sent to the user, the introduction of water and flour being controlled, always in a known way, according to the required solution concentration in the container 48.

As it can be particularly seen in figures 3 and 4, the helicoidal element 38 of scroll is essentially formed by a helix-wound wire or rod, the diameter of which is of the order of 1/10 of the internal diameter of duct 40. Furthermore, in order to better achieve the aims of the invention, it is advisable that the helicoidal element 38 undergoes, duringthe run of the flour towards X direction, at least one reduction of its pitch as indicated in 38', accompanied by a corresponding reduction of the diameter of duct 40, as indicated in 40'. Still according to the invention, the best conditions are reached when inside the mobile helicoidal element there is provided a fixed core, constituted for instance by a blade 52 positioned essentially axially and fixed with respect to the duct 40, for esample fixed in correspondence to the dowsntream end of the latter by means of a screw 54 inserted into a folded section 56 supporting the blade 52.

It has been surprisingly noticed that with a mixing-proportioning equipment of the shown type, the introduction of the powdered milk into the container 48 occurs with extreme regularity and at a constant rate for each adjustment of the feeding motor 44, independently from the atmospheric conditions and from the quality of the powdered milk concerned. The best conditions are obrained
when a distributing device of the type described above,
is associated with a mixer of the flour in the scroll of
the type above described and with a stirrer 18 with blades
made of resiliently warping material, which meet, in their
rotatory run, a clamp 58 on the cylindrical wall 16, which
retains them for an instant during their rotation and then
frees them, provoquing a series of vibrations which prevent
even in this area the formation of bridges or in any case
of hindrances to the free flowing of the substance.

It is obvious that, though the embodiment presently
considered as preferred has been illustrated, however, it
can be submitted to several modifications, such as for instance changes in the structure and configuration of the
helicoidal element 38, variations in the position of the
scroll pitch and diameter, variations in the form and disposition of the fixed core 52 and variations in the feeding section upstream the scroll, in particular in the
blade stirrer 18 and in the means sending the flour from
the latter to the scroll 36. All these possible modifica
tions, together with others which will be obvious to those
skilled in the art, must be considered as coming within
the scope of the present invention.

- 1 -

CLAIMS

1) A mixing-proportioning equipment  of powdered substances, in particular powdered milk flours in feeding machines for breeding animals, of the type comprising a hopper to receive the milk in powder, a device for distributing and proportioning the flour, as well as a container for mixing and prepa ring the artificial milk, which receives the flour and a corresponding amount of water, caracterized in that said de vice to introduce and proportion the flour is formed by a scroll which is controlled to rotate at a controllable speed inside a duct housing same, said scroll receiving the flour from the bottom of said hopper and sending it to said mixing con tainer.

2) A mixing-proportioning equipment according to claim 1, of the type in which between said hopper and said device for distributing and proportioning the flour a stirrer with ver tic  -axis blades  is placed, characterized in that said scroll is horizontally placed, between said stirrer and said mixing container and is fed from the top by the stirrer, while it makes the flour flow out axially into said mixing container.

3) A mixing-proportioning equipment according to claim 1 or 2, characterized in that said scroll is of the type without mobile core and has an external diameter substantially equal to the internal diameter of said housing duct.

4) A mixing-proportioning equipment according to claim 3, characterized in that said scroll is formed by a metal nelix-wound wire or rod.

5). A mixing-proportioning equipment according to claim
3 or 4, characterized in that a fixed core is axially
placed to the scroll and radially extends by at least
part of the internal diameter of the scroll in order to
hold up the rotations of the flour inside the scroll.

6) A mixing-proportioning equipment according to claim
5, characterized in that said fixed core is formed by at
least one blade extending longitudinaly to the scroll
and having a he-ght smaller than the scroll inner diameter, said blade being, overhangingly supported in
correspondence to the downstream end of the duct housing said scroll.

7) A mixing-proportioning equipment according to claim
3, characterized in that the pitch of said scroll is
variable and decreases at least once between the flour
input zone and output zone.

8) A mixing-proportioning equipment according to claim
7, characterized in that the duct housing the scroll
has a conical shape or has at leas one reduction of
its inner diameter in correspondence to said scroll
pitch reduction.

9) A mixing-proportioning equipment according to claim
7 or 8, characterized in that the ratio between the
scroll wire or rod diameter and the inner diameter of the housing duct is of the order of 1/10.

10) A mixing-proportioning equipment according to claim 2, characterized in that said stirrer has blades made of resi liently warping material and in that along the run of said blades there is provided a peripheral clamp capable of mo-
mentarily retaining each blade and then abruptly freeing it during its subsequent rotation.

11) A mixing-proportioning equipment according to one of the preceding claims, characterized in that said hopper houses, in a known way, a further stirrer which is moved along a conical path in the hopper and simultaneously rotated on itself.

Fig. 1

0040370

½

_Fig. 2_

58

10

16

18

52

40

38

_Fig. 3_

54

38'

X

42

40

56

38

52

40'

_Fig. 4_

56

52

54

40'

40

38'

38